# EUROPÄISCHE PATENTSCHRIFT

(11) **EP 3 036 716 B1**
(45) Veröffentlichungstag und Bekanntmachung des Hinweises auf die Patenterteilung: **06.03.2019**
(21) Anmeldenummer: 14741204.3
(22) Anmeldetag: 16.07.2014
(51) Int. Cl.: G06T 7/254

(54) **VERFAHREN ZUR BESTIMMUNG EINES VERÄNDERLICHEN UND/ODER SICH VERÄNDERNDEN BILDPUNKTES UND VORRICHTUNG ZUR DURCHFÜHRUNG EINES VERFAHRENS**
METHOD FOR DETERMINING A VARIABLE AND/OR CHANGING IMAGE POINT, AND APPARATUS FOR CARRYING OUT A METHOD
PROCÉDÉ DE DÉTERMINATION D'UN POINT D'IMAGE VARIABLE ET/OU VARIANT ET DISPOSITIF D'EXÉCUTION DU PROCÉDÉ

(30) Priorität: 23.08.2013 DE 102013013977
(43) Veröffentlichungstag der Anmeldung: 29.06.2016
(73) Patentinhaber: Sew-Eurodrive GmbH & Co. KG, 76646 Bruchsal (DE)
(72) Erfinder: HUA, Zhidong, 76137 Karlsruhe (DE)
(86) Internationale Anmeldenummer: PCT/EP2014/001940
(87) Internationale Veröffentlichungsnummer: WO 2015/024613

(56) Entgegenhaltungen:
- US-A1- 2007 242 339
- Ali Karandish ET AL: "Two-Axial Subtraction of Estimated Background Integral Projections: Fast Method in Automatic Target Detection and Tracking", IAPR Conference of Machine Vision Applications MVA 2005, 16. Mai 2005 (2005-05-16), Seiten 444-447, XP055139760, Gefunden im Internet: URL:http://b2.cvl.iis.u-tokyo.ac.jp/mva/pr oceedings/CommemorativeDVD/2005/papers/200 5444.pdf [gefunden am 2014-09-11]
- JOON-SEEK KIM ET AL: "A FAST FEATURE-BASED BLOCK MATCHING ALGORITHM USING INTEGRAL PROJECTIONS", IEEE JOURNAL ON SELECTED AREAS IN COMMUNICATIONS, IEEE SERVICE CENTER, PISCATAWAY, US, Bd. 10, Nr. 5, 1. Juni 1992 (1992-06-01), Seiten 968-971, XP000276102, ISSN: 0733-8716, DOI: 10.1109/49.139002

## Beschreibung

Die Erfindung betrifft ein Verfahren zur Bestimmung eines veränderlichen und/oder sich verändernden Bildpunktes und eine Vorrichtung zur Durchführung eines Verfahrens.

Es ist allgemein bekannt, dass mit einer Kamera Bilder aufnehmbar sind. Allerdings ist ein großer Speicher notwendig, wenn mehr als ein Bild abgespeichert werden soll, beispielsweise zur Bildauswertung.

Aus der Publikation von Ali Karandish et al.: "Two-Axial Subtraction of Estimated Background Integral Projections: Fast Method in Automatic Target Detection and Tracking", IAPR Conference of Machine Vision Applications MVA 2005, 16. Mai 2005, Seiten 444-447, ist eine zweidimensionale Subtraktion von geschätzten Hintergrundprojektionen bekannt zur schnellen Zielerkennung und Zielverfolgung.
Aus der US 2007/242339 A1 ist ein Verfahren zur Kommunikation bei einem Automobil bekannt.

Aus der Publikation von Joon-Seek Kim et al.: "A FAST FEATURE-BASED BLOCK MATCHING ALGORITHM USING INTEGRAL PROJECTIONS", IEEE JOURNAL ON SELECTED AREAS IN COMMUNICATIONS, IEEE SERVICE CENTER, PISCATAWAY, US, Bd. 10, Nr. 5, 1. Juni 1992, Seiten 968-971, ist ein schneller Merkmalsbasierter Algorithmus zur Bildauswertung mittels blockweiser Integralprojektionen bekannt.
Der Erfindung liegt daher die Aufgabe zugrunde, eine Bildauswertung mit geringem Speicherbedarf und/oder wenig Rechenkapazität zur Verfügung zu stellen. Erfindungsgemäß wird die Aufgabe bei dem Verfahren nach den in Anspruch 1 und bei der Vorrichtung nach den in Anspruch 6 angegebenen Merkmalen gelöst.
Von Vorteil ist dabei, dass ein geringer Speicherplatzbedarf für das Auswertemittel benötigt wird und geringe Rechenkapazität notwendig ist

Bei einer vorteilhaften Ausgestaltung wird vor der Kamera ein Farbfilter angeordnet. Von Vorteil ist dabei, dass Störeinflüsse unterdrückbar sind, insbesondere dynamische Veränderungen im Hintergrund, also in dem Teil des Bildes, welcher nicht zum Leuchtmittel zugeordnet ist.

Erfindungsgemäß werden die veränderlichen Bildpunkte von einem steuerbaren Leuchtmittel, insbesondere von einem steuerbaren signalgebenden Leuchtmittel, erzeugt. Von Vorteil ist dabei, dass die Position des Leuchtmittels bestimmbar ist.
Bei einer vorteilhaften Ausgestaltung werden weitere Bilder aufgenommen und es wird jeweils die Differenz der Zeilensummen und die Differenz der Spaltensummen eines jeweiligen Bildes zu einem zeitlich danach aufgenommenen Bild bestimmt, insbesondere zeitlich wiederkehrend. Von Vorteil ist dabei, dass das Blinken des Leuchtmittels detektierbar ist und aus dem zeitlichen Verhältnis zwischen dem aktivierten und deaktivierten Leuchtmittelzustand zu übertragende Information erkennbar ist.

Erfindungsgemäß werden Informationen, insbesondere Daten, mittels der Erkennung der zeitabhängigen Veränderung des Leuchtmittels übertragen. Von Vorteil ist dabei, dass durch das Blinken, also Aktivieren und Deaktivieren des Leuchtmittels, Signale übertragebar sind, Vorzugsweise wird hierbei eine Codierung zugrunde gelegt, die der Auswerteeinheit oder einer hiermit verbundenen Rechnereinheit bekannt gemacht ist.
Bei einer vorteilhaften Ausgestaltung ist die Kamera auf einem ersten Fahrzeug angeordnet und das Leuchtmittel stationär oder auf einem Fahrzeug angeordnet. Von Vorteil ist dabei, dass es nur auf die relative Bestimmung des Leuchtmittels durch die Kamera ankommt.
Bei einer vorteilhaften Ausgestaltung ist das Farbfilter auf die vom Leuchtmittel abgestrahlte Farbe abgestimmt, insbesondere für diese Farbe transparent ist und für andere Farben undurchsichtig und/oder nicht transparent. Von Vorteil ist dabei, dass Störeinflüsse unterdrückbar sind.

Erfindungsgemäß werden nicht nur die Zeilensummen und Spaltensummen bestimmt sondern auch die Diagonalensummen der Elemente der Matrix, also die Summe der Zahlenwerte einer Diagonale und die Summen der Zahlenwerte, die auf einer zur Diagonalen parallelen Linie angeordnet sind. Von Vorteil ist dabei, dass die Bestimmung des veränderlichen oder veränderbaren Bildpunktes redundant ausführbar ist. Wenn also die Bestimmung des Bildpunktes dreifach übereinstimmt, ist die Bestimmung als sicher anzunehmen. Wenn die Bestimmung des Bildpunktes aber nur zweifach übereinstimmt, also beispielsweise nur die Differenz der Diagonalensummen und die Differenz der Zeilensummen übereinstimmt, dann wird ein Fehler weitermeldbar und/oder die Bestimmung des Bildpunktes verworfen.

Die Erfindung wird nun anhand von Abbildungen näher erläutert:
In der Figur 1 ist ein erstes beispielhaftes Frame dargestellt, wobei die Pixel als Matrix angeordnet sind und jedem Pixel ein Zahlenwert zugeordnet ist, der die Helligkeit und/oder Farbe des Pixels, also Bildpunktes, repräsentiert.
In der Figur 2 ist ein zeitlich später erfasstes Frame dargestellt, wobei ebenfalls die Zeilensummen und die Spaltensummen dargestellt sind.
In der Figur 3 ist die Differenz der in Figur 1 und Figur 2 dargestellten Frames dargestellt.

Mit einer Kamera werden erfindungsgemäß zeitlich nacheinander Bilder aufgenommen. Die Bildpunkte, also Pixel, jedes Bilds, also Frames, werden in einer (m x n) - Matrix angeordnet. Eine Bildauswerteinheit bestimmt die Zeilensummen, also die Summen der jeweiligen Zeilen der Matrix, und die Spaltensummen, also die Summen der jeweiligen Spalten der Matrix.

Als (m x n) - Matrix wird im Beispiel eine (7 x 5) - Matrix vorgesehen.

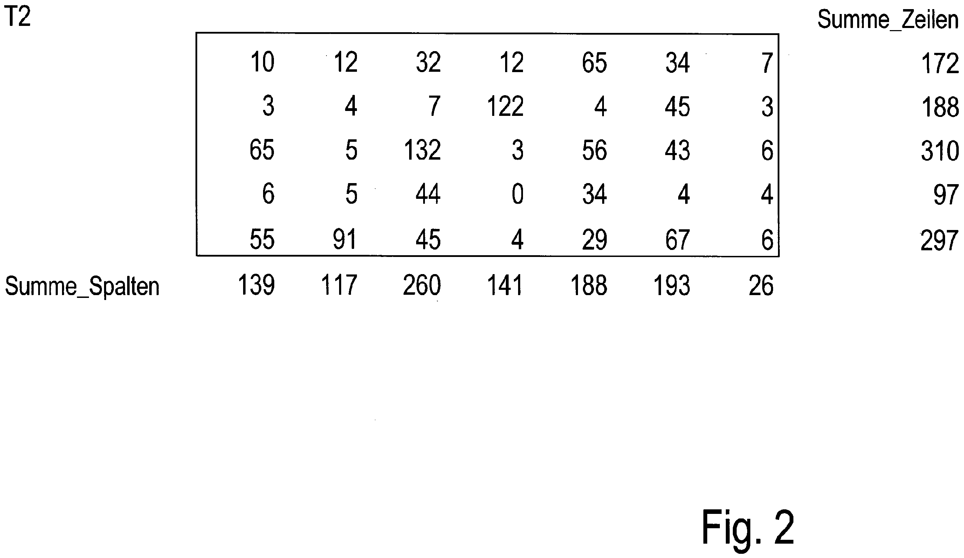

Das zeitlich beabstandet erfasste nächste Bild ist in Figur 2 dargestellt.

Das aufgenommene Bild unterscheidet sich nur durch ein im empfindlichen Beriech der Kamera angeordnetes Leuchtmittel, welches im zweiten Bild eine anderer Farbe und/oder Helligkeit aufweist als im ersten Bild.

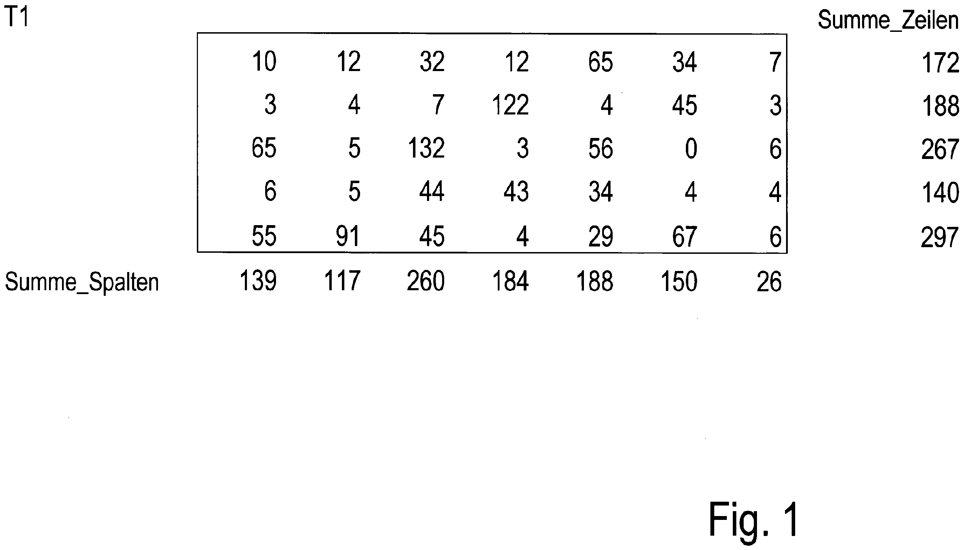

Die Veränderung des vom Leuchtmittel abgestrahlten Lichtes muss also schneller erfolgen als mit der Framerate, insbesondere also zeitlich schneller als der zeitliche Abstand der Erfassung der beiden in Figur 1 und 2 dargestellten Bilder.

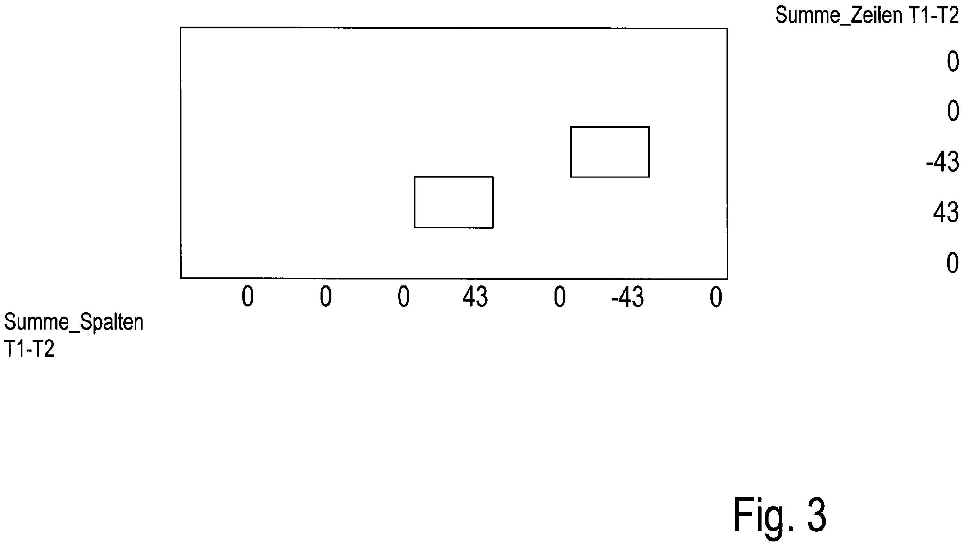

In Figur 3 ist die Differenz der Zeilensummen und die Differenz der Spaltensummen beiden Bilder dargestellt.

Auf diese Weise sind diejenigen Pixel identifizierbar, welche sich von der Erfassung des ersten Bildes, also Figur 1, bis zur Erfassung des zweiten Bildes geändert haben.

Die Veränderung der Leuchtstärke oder Farbe der Leuchtmittel und somit auch die Zahlenwerte der entsprechenden erfassten Pixel erfolgt also schneller als die Veränderung der anderen Pixel, welche somit Gegenstände abbilden, welche vergleichsweise statisch vorgesehen sind.

Mittels des erfingungsgemäßen Verfahrens, also der Differenzbildung bei den Spaltensummen und Zeilensummen ist also eine Bestimmung derjenigen Pixel ermöglicht, deren Zahlenwerte sich vom ersten zum zweiten Bild verändern.

Vorteilig ist dabei, dass nicht alle Matrizen abzuspeichern sind sondern nur die Zeilensummen und Spaltensummen abgespeichert werden müssen zur Differenzbildung. Somit ist ein geringer Speicherbedarf und eine schnelle Bestimmung der veränderlichen Pixel ausführbar.

Mittels der beschriebenen Bestimmung der veränderlichen Bildpunkte ist also eine Bestimmung der Position des signalgebenden Leuchtmittels ermöglicht. Insbesondere ist hierbei die Winkellage zur Kameraausrichtung bestimmbar.

Bei einem weiteren erfindungsgemäßen Ausführungsbeispiel werden statt der (7 x 5) - Matrix eine Matrix verwendet, die größer als 600 x 400 ist. Der Zahlenwert jedes Pixels ist hierbei mit 8 Bit oder mehr repräsentierbar.

Bei einem weiteren erfindungsgemäßen Ausführungsbeispiel wird ein Farbfilter vor der Kamera angeordnet, so dass nur die Farbe des Leuchtmittels detektierbar ist. Auf diese Weise werden dynamische Störeinflüsse der sonstigen Gegenstände unterdrückt.

### Bezugszeichenliste

T1 erstes Frame
T2 zweites Frame

## Patentansprüche

1. Verfahren zur Bestimmung eines veränderlichen und/oder sich verändernden Bildpunktes,
wobei zeitlich beabstandet zwei Bilder aufgenommen werden mittels einer Kamera,
wobei jedes Bild als Matrix von Bildpunkten darstellbar ist, wobei jedem Bildpunkt ein Zahlenwert zur Darstellung von Helligkeit, Farbe und/oder Graustufe, zuordenbar ist, und für jedes Bild jeweils
- die Summe der Zahlenwerte jeder Zeile der Matrix gebildet wird, also jede Zeilensumme,
- die Summe der Zahlenwerte jeder Spalte der Matrix gebildet wird, also jede Spaltensumme,
wobei die Differenz der Zeilensummen der beiden Bilder und die Differenz der Spaltensummen der beiden Bilder gebildet wird, so dass die veränderlichen Bildpunkte identifizierbar sind, und aus nicht verschwindenden Differenzen ein veränderlicher Bildpunkt und/oder sich verändernder Bildpunkt bestimmt wird,
**dadurch gekennzeichnet, dass**
die veränderlichen Bildpunkte von einem steuerbaren Leuchtmittel, insbesondere von einem steuerbaren signalgebenden Leuchtmittel, durch zeitliche Veränderung des vom Leuchtmittel abgestrahlten Lichtes erzeugt werden, wobei Informationen, insbesondere Daten, mittels der Erkennung der zeitabhängigen Veränderung des Leuchtmittels übertragen werden, wobei nicht nur die Zeilensummen und Spaltensummen bestimmt werden sondern auch die Diagonalensummen der Elemente der Matrix,
also die Summe der Zahlenwerte einer Diagonale und die Summen der Zahlenwerte, die auf einer zur Diagonalen parallelen Linie angeordnet sind,
wobei zur Bestimmung der veränderlichen Bildpunkte auch die Differenz der Diagonalensummen der beiden Bilder berücksichtigt wird.

2. Verfahren nach Anspruch 1,
**dadurch gekennzeichnet, dass**
vor der Kamera ein Farbfilter angeordnet wird.

3. Verfahren nach mindestens einem der vorangegangenen Ansprüche,
**dadurch gekennzeichnet, dass**
weitere Bilder aufgenommen werden und jeweils die Differenz der Zeilensummen und die Differenz der Spaltensummen sowie die Differenz der Diagonalensummen eines jeweiligen Bildes zu einem zeitlich danach aufgenommenen Bild bestimmt wird, insbesondere zeitlich wiederkehrend.

4. Verfahren nach mindestens einem der vorangegangenen Ansprüche,
**dadurch gekennzeichnet, dass**
die Kamera auf einem ersten Fahrzeug angeordnet ist und das Leuchtmittel stationär oder auf einem Fahrzeug angeordnet ist.

5. Verfahren nach Anspruch 2,
**dadurch gekennzeichnet, dass**
das Farbfilter auf die vom Leuchtmittel abgestrahlte Farbe abgestimmt ist, insbesondere für diese Farbe transparent ist und für andere Farben undurchsichtig und/oder nicht transparent.

6. Vorrichtung umfassend Mittel zur Durchführung eines Verfahrens nach mindestens einem der vorangegangenen Ansprüche,
wobei die von einer Kamera aufgenommenen Bilder einer Auswerteeinheit zugeführt werden, welche die Zeilensummen und Spaltensummen sowie Diagonalensummen bestimmt,
wobei die Auswerteeinheit einen Speicher umfasst, in welchem die Zeilensummen und Spaltensummen sowie die Diagonalensummen abspeicherbar sind, insbesondere nicht aber ein oder zwei Bilder,
wobei die Auswerteeinheit ein Mittel zur Bildung der Differenzen der Zeilensummen und Spaltensummen sowie der Diagonalensummen der aufgenommenen Bilder aufweist.

## Claims

1. Method for determining a variable and/or changing image point,
wherein two images are captured by a camera in a manner spaced apart over time,
wherein each image can be represented as a matrix of image points, wherein each image point can be assigned a numerical value for representing brightness, colour and/or grey level, and for each image in each case
- the sum of the numerical values of each row of the matrix is formed, that is to say each row sum,
- the sum of the numerical values of each column of the matrix is formed, that is to say each column sum,
wherein the difference between the row sums of the two images and the difference between the column sums of the two images is formed, so that the variable image points can be identified, and a variable image point and/or changing image point is determined from non-vanishing differences,
**characterized in that**
the variable image points are generated by a controllable illuminant, in particular by a controllable, signal-emitting illuminant, by varying over time the light that is emitted by the illuminant,
wherein information, in particular data, is transmitted by recognizing the time-dependent variation of the illuminant,
wherein not only are the row sums and column sums determined, but also the diagonal sums of the elements of the matrix, that is to say the sum of the numerical values of a diagonal and the sum of the numerical values which are arranged on a line parallel to the diagonal,
wherein the difference between the diagonal sums of the two images is also taken into consideration for determining the variable image points.

2. Method according to claim 1,
**characterized in that**
a colour filter is arranged in front of the camera.

3. Method according to at least one of the preceding claims,
**characterized in that**
further images are captured and in each case the difference between the row sums and the difference between the column sums and also the difference between the diagonal sums of a respective image and an image captured temporally thereafter is determined, in particular in a temporally recurring manner.

4. Method according to at least one of the preceding claims,
**characterized in that**
the camera is arranged on a first vehicle and the illuminant is arranged in a stationary manner or on a vehicle.

5. Method according to claim 2,
**characterized in that**
the colour filter is tailored to the colour emitted by the illuminant, in particular is transparent in respect of said colour and is opaque and/or non-transparent in respect of other colours.

6. Device comprising means for carrying out a method according to at least one of the preceding claims,
wherein the images captured by a camera are fed to an evaluation unit which determines the row sums and column sums and also the diagonal sums,
wherein the evaluation unit includes a memory in which the row sums and column sums and also the diagonal sums can be stored, but in particular not one or two images,
wherein the evaluation unit has a means for forming the differences between the row sums and column sums and also the diagonal sums of the captured images.

## Revendications

1. Procédé de détermination d'un point d'image variable et/ou variant,
dans lequel deux images sont capturées de manière espacée dans le temps au moyen d'une caméra, chaque image pouvant être représentée sous la forme d'une matrice de points d'image, une valeur numérique pour représenter la luminosité, la couleur et/ou le niveau de gris pouvant être affectée à chaque point d'image, et
pour chaque image,
- la somme des valeurs numériques de chaque ligne de la matrice est formée, c'est-à-dire chaque somme en ligne,
- la somme des valeurs numériques de chaque colonne de la matrice est formée, c'est-à-dire chaque somme en colonne,
la différence des sommes en ligne des deux images et la différence des sommes en colonne des deux images étant formées de telle sorte que les points d'image variables peuvent être identifiés, et un point d'image variable et/ou un point d'image variant étant déterminé à partir de différences non nulles,
**caractérisé en ce que**
les points d'image variables sont produits par une source lumineuse commandable, en particulier par une source lumineuse commandable délivrant un signal, en faisant varier dans le temps la lumière émise par la source lumineuse,
dans lequel des informations, en particulier des données, sont transmises au moyen de la détection de la variation en fonction du temps de la source lumineuse,
dans lequel non seulement les sommes en ligne et les sommes en colonne, mais aussi les sommes en diagonale des éléments de la matrice sont déterminées, c'est-à-dire la somme des valeurs numériques d'une diagonale et les sommes des valeurs numériques qui sont disposées sur une ligne parallèle à la diagonale,
dans lequel la différence entre les sommes en diagonale des deux images est également prise en compte pour déterminer les points d'image variables.

2. Procédé selon la revendication 1,
**caractérisé en ce qu'**un filtre de couleur est disposé devant la caméra.

3. Procédé selon au moins l'une des revendications précédentes,
**caractérisé en ce que** d'autres images sont capturées et **en ce que** la différence des sommes en ligne et la différence des sommes en colonne ainsi que la différence des sommes en diagonale d'une image respective par rapport à une image capturée après dans le temps sont déterminées, en particulier de manière récurrente dans le temps.

4. Procédé selon au moins l'une des revendications précédentes,
**caractérisé en ce que** la caméra est disposée sur un premier véhicule et la source lumineuse est stationnaire ou disposée sur un véhicule.

5. Procédé selon la revendication 2,
**caractérisé en ce que** le filtre de couleur est adapté à la couleur émise par la source lumineuse, en particulier est transparent pour cette couleur et opaque et/ou non transparent pour les autres couleurs.

6. Dispositif comprenant des moyens pour mettre en oeuvre un procédé selon au moins l'une des revendications précédentes,
dans lequel les images capturées par une caméra sont amenées à une unité d'évaluation qui détermine les sommes en ligne et les sommes en colonne ainsi que les sommes en diagonale,
dans lequel l'unité d'évaluation comprend une mémoire dans laquelle les sommes en ligne et les sommes en colonne ainsi que les sommes en diagonale peuvent être enregistrées, mais pas, en particulier, une ou deux images,
dans lequel l'unité d'évaluation présente un moyen pour former les différences des sommes en ligne et des sommes en colonne ainsi que des sommes en diagonale des images capturées.
